# EUROPÄISCHE PATENTSCHRIFT

(11) **EP 0 532 985 B1**
(45) Veröffentlichungstag und Bekanntmachung des Hinweises auf die Patenterteilung: **05.06.1996**
(21) Anmeldenummer: 92115028.0
(22) Anmeldetag: 03.09.1992
(51) Int. Cl.: B28B 1/14, C04B 35/56

(54) **Verfahren zur Herstellung von Keramikteilen**
Method for fabricating ceramic parts
Procédé pour fabriquer des pièces en céramique

(30) Priorität: 20.09.1991 DE 4131335
(43) Veröffentlichungstag der Anmeldung: 24.03.1993
(73) Patentinhaber: SCHUNK INGENIEURKERAMIK GmbH, D-47877 Willich (DE)
(72) Erfinder: Berroth, Karl, Dr., W-4000 Düsseldorf 11 (DE); Binder, Olaf, Dipl.-Ing. (FH), W-4156 Willich 1 (DE)
(74) Vertreter: Sparing Röhl Henseler Patentanwälte

(56) Entgegenhaltungen:
- EP-A- 0 045 134
- EP-A- 0 294 850
- EP-A- 0 300 681
- AMERICAN CERAMIC SOCIETY BULLETIN Bd. 70, Nr. 10, 1991, COLUMBUS US Seiten 1641 - 1649 , XP000236791 OGBEMI O. OMATETE, MARK A. JANNEY, RICHARD A. STREHLOW 'GELCASTING. A NEW CERAMIC FORMING PROCESS'

## Beschreibung

Die Erfindung betrifft ein Verfahren zur Herstellung von Keramikteilen, wobei eine Dispersion von pulverförmigem keramischem Rohstoffmaterial hergestellt, die Dispersion drucklos bzw. mit niedrigem Druck bis etwa 5 bar in eine Form vergossen und der ausgehärtete und entformte Grünkörper einer Wärmebehandlung unterworfen wird.

Zur Herstellung von Keramikkörpern aus Siliciumcarbid (und anderen keramischen Rohstoffen) ist es bekannt, einen wässrigen Schlicker aus feinteiligem Siliciumcarbid und Kohlenstoff herzustellen, der dann in Formen eingebracht wird, die wasserabsaugend wirken, um so dem Schlicker in der Form das Wasser zu entziehen. Ein derartiger Schlicker erlaubt nicht die Herstellung komplizierterer Körper, sondern bereits aufgrund der zu verwendenden Formen und auch aufgrund dessen, daß ein Schlicker in sehr enge Bereiche kaum eindringen und dann die Form nicht ausfüllen kann, nur die Realisierung relativ einfacher Geometrien. Nach dem Entformen des trockenen Grünkörpers kann dieser zwar mechanisch bearbeitet werden, jedoch erfordert dies zusätzlichen Arbeits- und Materialaufwand.

Ferner ist es bekannt, eine wässrige Suspension aus feinteiligem Siliciumcarbid und Kohlenstoff sowie einem organischen Binder herzustellen, die dann sprühgetrocknet wird. Das auf diese Weise erhaltene Granulat wird kalt isostatisch zu Grünkörpern gepreßt, die anschließend unter Inertgas geglüht werden, um das Bindemittel zu cracken. Auch hierbei lassen sich nur relativ einfache Geometrien verwirklichen, für komplexe Strukturen ist dieses Verfahren nicht geeignet. Zwar kann man auch hier eine spanende Bearbeitung nach dem Pressen anschließen, jedoch ist auch dies mit entsprechendem Arbeits- und Materialaufwand verbunden.

Auch ist es bekannt, eine Masse, die aus feinteiligem Siliciumcarbid und Kohlenstoff sowie aus Wasser und einem organischen Plastifizierungs- und Bindemittel durch Kneten hergestellt wird, auf einer Strangpresse zu extrudieren, wobei dann das Extrudat entsprechend zerteilt, getrocknet und weiterbehandelt wird. Abgesehen davon, daß der apparative Aufwand beträchtlich ist, ist die extrudierte Masse zunächst nicht fest, so daß eine aufwendige und komplizierte Handhabung notwendig ist, um Deformationen selbst bei weniger komplizierten Querschnittsgeometrien zu vermeiden. Abgesehen davon lassen sich hierdurch nur in Achsrichtung gleichbleibende Formkörper herstellen.

Zusätzlich ist es bekannt, mit einer thermo- oder duroplastischen Verbindung plastifizierte keramische Masse bei hohen Drücken durch Spritzgießen zu verarbeiten. Dies erfordert aber einen hohen appparativen Aufwand mit komplizierten Handhabung der Grünkörper und mit teuren Formen, der sich erst bei einer sehr großen Stückzahl lohnt.

Auch ist es bekannt, Dispersionen aus Siliciumcarbid und Kohlenstoff sowie einem organischen Lösungsmittel herzustellen, wobei die Dispersion auf ein Stahlband oder eine Glasplatte in einer Dicke von etwa 0,2 bis 3 mm gegossen wird. Nach Verdampfen des Lösungsmittels erhält man eine Folie mit einer Restflexibilität, aus der Teile gestanzt werden, die anschließend aufeinander laminiert und einer entsprechenden Nachbehandlung unterworfen werden. Auch dieses Verfahren ist somit sehr aufwendig und beinhaltet außerdem Probleme in Bezug auf Toleranzeinhaltung, da beim Laminieren Druck anzuwenden ist.

Ferner ist aus der DE-B-2 837 900 ist ein Verfahren zur Herstellung von Formkörpern aus Siliciumcarbid der eingangs genannten Art bekannt, bei dem von einem wässrigen Schlicker ausgegangen wird, der in Gipsformen gegossen wird. Gipsformen sind poröse, wassersaugende Formen, die aufgrund des dadurch bewirkten Wasserentzugs zwangsläufig zu einem entsprechenden Schwinden des Grünkörpers führen. Beispielsweise schwindet der Grünkörper bei Verwendung von Kernen auf den steifen Kern, was zu Rissen führen kann. Außerdem muß die Gipsform zum Entformen zerstört werden und ist nicht wiederverwendbar. Der Zusatz eines aushärtbaren Kunstharzes zur Festigkeitserhöhung des Grünkörpers, der in einer Menge von etwa 1 bis 10 Gew.% erfolgt, ändert ebensowenig wie eine eventuelle Verlangsamung der Wasseraufnahme durch die Gipsform durch deren Beschichtung mit Wachs etwas daran, daß der Schlicker ein wässriger ist, der das Schwindungsproblem beinhaltet und die Zerstörung der Gipsformen zum Entformen benötigt. Abgesehen davon kommt es nicht auf die Konsistenz des Kunstharzes an, es kann sowohl in flüssiger wie in fester Form zugesetzt werden. Anstelle des Kunstharzzusatzes kann hierbei die Grünfestigkeit auch dadurch erhöht werden, daß ein "Brennen" des Grünkörpers in sauerstoffhaltiger Atmosphäre zum Umwandeln des SiC in SiO₂, das als Bindephase zur Erhöhung der Grünfestigkeit dient, vorgenommen wird, wobei noch etwas restlicher Kohlenstoff aus der Zersetzung des Kunststoffs im Grünkörper erhalten wird. Schließlich wird eine weitere organische Verbindung wie Furfurylalkohol eingebracht und verkokt, um sie in einem weiteren Hochtemperaturprozeß in Kohlenstoff zu überführen, damit in den Poren des Formkörpers Kohlenstoff in gewünschter Menge vorhanden ist.

Aus der EP-A-0 300 681 ist ein Preßformen zur Herstellung von Keramikteilen aus einer wässrigen Aufschlämmung beschrieben, bei dem zur Herstellung zufriedenstellender Grünlinge eine Wasserabsaugung über ein wasserdurchlässiges Formteil erfolgt.

Aufgabe der Erfindung ist es, ein Verfahren der eingangs genannten Art zu schaffen, das es ermöglicht, Keramikteile auch mit sehr komplizierten Geometrien und gegebenenfalls mit sehr dünnwandigen Bereichen in einfacher und wirtschaftlicher Weise sowohl bei geringen, als auch bei großen Stückzahlen herzustellen.

Diese Aufgabe wird dadurch gelöst, daß eine relativ dünnflüssige Dispersion des keramischen Rohstoffmaterials in einer flüssigen aushärtbaren organischen Verbindung hergestellt wird, die ohne Flüssigkeitsentzug aushärtet, wobei gegebenenfalls zur Viskositätserniedrigung zugesetztes streckendes Wasser - maximal bis zu etwa 30 Gew.-% - im sich vernetzenden Harz zunächst resorbiert wird und erst bei der späteren Wärmebehandlung, dem Glühen des Grünkörpers unter Inertgasatmosphäre, verdampft oder verdunstet, und die in eine nichtsaugende Form vergossen wird, wobei der Grünkörper unter Inertatmosphäre derart geglüht wird, daß die ausgehärtete organische Verbindung gecrackt wird.

Hierbei wird eine Dispersion der keramischen Rohstoffe in einer flüssigen, aushärtbaren, organischen Verbindung verwendet, die ohne Flüssigkeitsentzug aushärtet, wobei gegebenenfalls zur Viskositätserniedrigung zugesetztes streckendes Wasser im sich vernetzenden Harz zunächst resorbiert wird und erst bei der späteren Wärmebehandlung, dem Glühen des Grünkörpers unter Inertgasatmosphäre, verdampft oder verdunstet. Dementsprechend werden daher nichtsaugende Formen eingesetzt und es bleibt auch der gesamte Inhalt der Form erhalten, ein Schwinden tritt nicht ein. Ferner lassen sich hierdurch sehr dünne Wandungen oder Stege problemlos herstellen. Die Formen sind auch, soweit es sich nicht um verlorene Kerne handelt, grundsätzlich wiederverwendbar. Die Formen können insbesondere aus weichem Material wie Gummi oder Silikonkautschuk sein, so daß sich keine Spannungen beim Erwärmen der in der Form befindlichen Dispersion aufgrund unterschiedlicher Wärmeausdehnungekoeffizienten ergeben. Ein Schwinden findet erst nach der Entformung während des Glühens statt. Auch findet keine Rekristallisation statt, sondern nur ein Cracken der organischen Verbindung in flüchtige Bestandteile und gegebenenfalls verbleibende Bestandteile wie Kohlenstoff. Hierdurch wird Kohlenstoff in den Poren des Formkörpers in gewünschter Menge sofort erhalten, so daß sich ein weiterer Hochtemperaturprozeß erübrigt.

Infolge der relativ dünnflüssigen Dispersion (etwa sirupartig bis tranig) ist es möglich, komplizierte Formen auch mit sehr dünnwandigen Abschnitten für den herzustellenden Formkörper insbesondere drucklos (oder unter geringem Druck bis etwa 5 bar) vollständig zu füllen, so daß - solange die Entformbarkeit gegebenenfalls auch mit verlorenen Kernen und Formen gewährleistet ist - beliebige Geometrien auch mit großen Materialdickeübergängen realisierbar sind. Da die Dispersion in der Form aushärtet, ist die Handhabung der Grünkörper unproblematisch und gegebenenfalls kann noch eine mechanische Nachbearbeitung vorgenommen werden, etwa Bohrungen od.dgl. angebracht werden.

Die hierbei verwendeten Formen können aus Metall, Gummi, Wachs oder Kunststoff sein, es können auch etwa auf Gießereiformmaschinen hergestellte und beschichtete Sandformen verwendet werden. Formen aus Siliconharz oder Polytetrafluorethylen bzw. anderen polyhalogenierten Kohlenwasserstoffen werden normalerweise bevorzugt, weil bei diesen kein Formtrennmittel notwendig ist. Die Formen können nach Aushärten der Gießlinge mechanisch, chemisch oder thermisch entfernt werden.

Das Verfahren eignet sich zur Herstellung beispielsweise von Formkörpern aus Siliciumkarbid, Siliciumnitrid, Aluminiumoxid, Zirkoniumoxid, Aluminiumtitanat, Aluminiumnitrid, Mullit od.dgl. Hierbei ist die aushärtbare organische Verbindung entsprechend zu wählen, für Formkörper aus Siliciumnitrid kommen Si-haltige Polymere infrage, die beim Cracken neben flüchtigen Produkten Si₃N₄ bilden. Für aluminiumhaltige Keramik kommen entsprechende aluminiumorganische Verbindungen infrage. Außerdem kann man aber auch solche organischen Verbindungen wählen, die nur in flüchtige Bestandteile gecrackt werden. Als organische Verbindungen kommen allgemein aushärtbare Polymere, Duromere, Duroplaste, metallorganische Polymere und Kunstharze infrage. Die zu dispergierenden keramischen Rohmaterialteilchen haben zweckmäßigerweise eine Korngröße von etwa 0,5 bis 500 µm, insbesondere 10 bis 150 µm.

Über die Körnungen der Ausgangsmaterialen lassen sich die Materialeigenschaften der herzustellenden Keramikteile in bezug auf Wärmeleitfähigkeit und mechanische Festigkeit etwas beeinflussen.

Für Siliciumcarbidkeramik geht man üblicherweise von pulverförmigem Siliciumcarbid und Kohlenstoff aus, die in einem Kunstharz dispergiert werden. Hier kommen insbesondere dünnflüssige Furanharze, Epoxidharze, Formaldehydharze, Phenolharze oder Siliconharze infrage. Zweckmäßigerweise werden zur Herstellung der Dispersion
5 bis 40 Gew.-%, insbesondere 10 bis 25 Gew.-% Kunstharz,
0 bis 15 Gew.-%, insbesondere 3 bis 10 Gew.-% Wasser,
0 bis 20 Gew.-%, insbesondere 1 bis 10 Gew. -% Kohlenstoff,
50 bis 95 Gew.-%, insbesondere 60 bis 75 Gew.-% SiC
verwendet. Das gegebenenfalls vorhandene Wasser dient zum Strecken des Kunstharzes und wird beim Glühen des Grünkörpers ausgedampft. Das Verhältnis von SiC zu C beträgt zweckmäßigerweise 80:20 bis 95:5, insbesondere etwa 90:10. Als Kohlenstoff kommt Ruß, Koks, Graphit infrage, wobei Korngrößen von 0,02 bis 500 µm, insbesondere 0,03 bis 5 µm, vorteilhaft sind.

Das Aushärten des in der Form befindlichen Grünkörpers kann durch Wärmeeinwirkung beschleunigt werden. Wenn ungestrecktes Kunstharz zur Anwendung kommt, kann gegebenenfalls bis zu etwa 150°C erwärmt werden, wenn das Kunstharz mit Wasser gestreckt ist, ist nur eine Erwärmung auf ca. 50 bis 70°C zweckmäßig.

Beim Glühen wird das Kunstharz gecrackt, so daß sich ein offenporiger Körper ergibt, wobei die flüchtigen Bestandteile entfernt werden, so daß noch ein entsprechender Kohlenstoffanteil in den Porenbereichen verbleibt. Diese Porenstruktur erlaubt es, ohne weiteres metallisches Silcium als Schmelze und/oder als Dampf zu infiltrieren, das wenigstens teilweise mit dem freien Kohlenstoff zu weiterem SiC reagiert. Zweckmäßigerweise wird derart metallisches Silicium infiltriert, daß 3 bis 30 Gew.-%, insbesondere 8 bis 15 Gew.-%, freies metallisches Silicium und/oder gegebenenfalls freier, unreagierter Restkohlenstoff von 0 bis 20 Gew. -%, insbesondere 0 bis 2 Gew.-%, Rest SiC bleibt. Die Porenstruktur geht durch das Infiltrieren des Siliciums verloren, im fertigen Zustand besitzt das Keramikteil keine Porosität mehr, der Werkstoff ist dicht, die Oberfläche geschlossen.

Derartige Siliciumcarbidwerkstoffe sind korrosionsfest, oxidationsbeständig, temperaturwechselbeständig, erosionsbeständig und besitzen eine sehr gute Wärmeleitfähigkeit. Sie eignen sich daher beispielsweise für Pumpenlaufräder, Leitapparate und Schaufeln für Gasturbinen, plattenförmige oder rotationssymmetrische, mit dünnwandigen Rippen versehene Wärmetauscher, die sich nach dem vorstehend beschriebenen Verfahren ebenso wie andere komplexe, feinstrukturierte Bauteile ohne weiteres herstellen lassen.

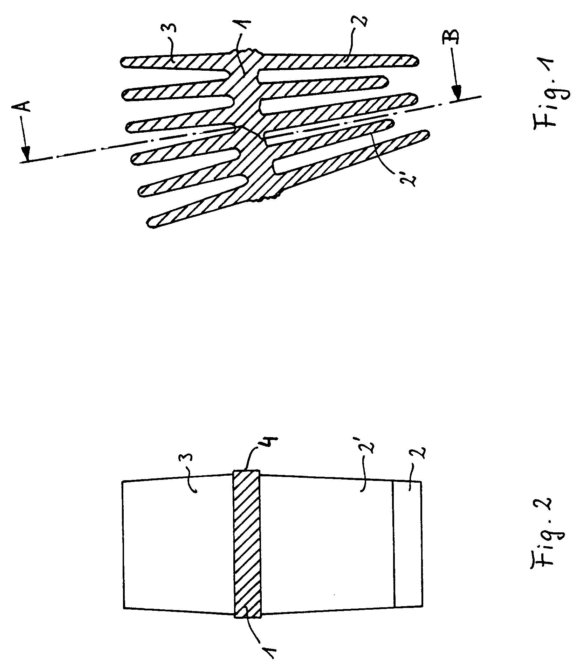

In den beigefügten Abbildungen ist in Fig. 1 im Radialschnitt ein rotationssymmetrischer, mit radialen, dünnwandigen, von einer ringförmigen mittleren Trennwand 1 aus einwärts bzw. auswärts gerichteten Rippen 2 bzw. 3 versehener Wärmetauscher dargestellt (Fig. 2 zeigt einen Schnitt längs der Linie A-B von Fig. 1), wie er nach dem erfindungsgemässen Verfahren herstellbar ist. Ein derartiger, in axialer Richtung durchströmbarer Wärmetauscher kann etwa 2,5 mm dicke Rippen 2, 3 mit entsprechend schmalen Zwischenräumen zwischen den Rippen 2, 3 aufweisen, so daß sich bei der dargestellten Struktur beispielsweise Oberflächen von etwa 3 m²/m Länge bei ca. 250 mm Außendurchmesser und 100 mm Innendurchmesser erzielen lassen. Derartig komplizierte Keramikteile lassen sich nur mit dem erfindungsgemäßen Verfahren wirtschaftlich herstellen.

## Patentansprüche

1. Verfahren zur Herstellung von Keramikteilen, wobei eine Dispersion von pulverförmigem keramischem Rohstoffmaterial hergestellt, die Dispersion drucklos bzw. mit niedrigem Druck bis etwa 5 bar in eine Form vergossen und der ausgehärtete und entformte Grünkörper einer Wärmebehandlung unterworfen wird, dadurch **gekennzeichnet**, daß eine relativ dünnflüssige Dispersion des keramischen Rohstoffmaterials in einer flüssigen aushärtbaren organischen Verbindung hergestellt wird, die ohne Flüssigkeitsentzug aushärtet, wobei gegebenenfalls zur Viskositätserniedrigung zugesetztes streckendes Wasser - maximal bis zu etwa 30 Gew.-% - im sich vernetzenden Harz zunächst resorbiert wird und erst bei der späteren Wärmebehandlung, dem Glühen des Grünkörpers unter Inertgasatmosphäre, verdampft oder verdunstet, und die in eine nichtsaugende Form vergossen wird, wobei der Grünkörper unter Inertatmosphäre derart geglüht wird, daß die ausgehärtete organische Verbindung gecrackt wird.

2. Verfahren nach Anspruch 1, dadurch gekennzeichnet, daß als pulverförmiges Keramikmaterial SiC zusammen mit feinteiligem Kohlenstoff in einem flüssigen Kunstharz dispergiert wird.

3. Verfahren nach Anspruch 2, dadurch gekennzeichnet, daß metallisches Si nach dem Cracken des Kunstharzes bei erhöhter Temperatur als Schmelze und/oder Dampf infiltriert wird.

4. Verfahren nach einem der Ansprüche 1 bis 3, dadurch gekennzeichnet, daß eine weiche Form verwendet wird.

5. Verfahren nach einem der Ansprüche 1 bis 4, dadurch gekennzeichnet, daß das Aushärten des Kunstharzes durch Erwärmen beschleunigt wird.

6. Verfahren nach einem der Ansprüche 1 bis 5, dadurch gekennzeichnet, daß Kunststofformen, insbesondere aus Siliconkautschuk oder aus Polyhalogenkohlenwasserstoff, verwendet werden.

7. Verfahren nach einem der Ansprüche 2 bis 6, dadurch gekennzeichnet, daß etwa 5 bis 40 Gew.-%, insbesondere 10 bis 25 Gew.-%, Kunstharz, gegebenenfalls mit bis zu etwa 15 Gew.-%, insbesondere etwa 3 bis 10 Gew.-% Wasser gestreckt, und Rest SiC und C zur Herstellung der Dispersion verwendet werden.

8. Verfahren nach einem der Ansprüche 2 bis 7, dadurch gekennzeichnet, daß das Verhältnis von SiC zu C etwa 80:20 bis 95:5, insbesondere etwa 90:10, ist.

9. Verfahren nach einem der Ansprüche 1 bis 8, dadurch gekennzeichnet, daß die zu dispergierenden Keramikmaterialteilchen eine Korngröße von etwa 0,5 bis 500 µm, insbesondere 10 bis 150 µm, besitzen.

10. Verfahren nach einem der Ansprüche 2 bis 9, dadurch gekennzeichnet, daß die zu dispergierenden Kohlenstoffteilchen eine Korngröße von 0,02 bis 500 µm, insbesondere 0,03 bis 5µm, besitzen.

11. Verfahren nach einem der Ansprüche 3 bis 10, dadurch gekennzeichnet, daß metallisches Si derart infiltriert wird, daß sich ein Anteil an freiem Si von 3 bis 30 Gew.-%, insbesondere 8 bis 15 Gew.-%, ergibt.

12. Verfahren nach einem der Ansprüche 1 bis 11, dadurch gekennzeichnet, daß die Menge an Kunstharz und gegebenenfalls die Infiltration von Si so bemessen werden, daß bis zu 20 Gew.-%, insbesondere 0 bis 2 Gew.-% Restkohlenstoff verbleiben.

## Claims

1. Process for the fabrication of ceramic parts, a dispersion of powdery ceramic raw materials being produced, the dispersion being cast into a mould without pressure or at a low pressure up to about 5 bars, and the cured green body released from the mould being subjected to a heat treatment, **characterized in that** a relatively thin-bodied dispersion of the ceramic raw material is produced in a liquid, curable organic compound which cures without removal of liquid, if necessary diluting water added to lower viscosity - not more than up to about 30% by weight - is first resorbed in the polymerising resin and only evaporated or vaporised during the later heat treatment, the firing of the green body, in an inert gas atmosphere, and which is cast into a non-suction mould, the green body being fired in an inert atmosphere in such a manner that the cured organic compound is cracked.

2. Process according to Claim 1, characterized in that SiC, as a powdery ceramic material, together with fine-particle carbon is dispersed in a liquid synthetic resin.

3. Process according to Claim 2, characterized in that metallic Si is infiltrated after cracking of the synthetic resin at an increased temperature as a melt and/or vapour.

4. Process according to one of Claims 1 to 3, characterized in that a soft mould is used.

5. Process according to one of Claims 1 to 4, characterized in that the curing of the synthetic resin is accelerated by heating.

6. Process according to one of Claims 1 to 5, characterized in that plastic moulds, especially made of silicone rubber or of polyhalogen hydrocarbon are used.

7. Process according to one of Claims 2 to 6, characterized in that about 5 to 40% by weight, especially 10 to 25% by weight synthetic resin, where necessary diluted with up to about 15% by weight, especially about 3 to 10% by weight water, and residual SiC and C are used to produce the dispersion.

8. Process according to one of Claims 2 to 7, characterized in that the ratio of SiC to C is about 80:20 to 95:5, especially about 90:10.

9. Process according to one of Claims 1 to 8, characterized in that the ceramic material particles to be dispersed have a particle size of 0.5 to 500 um, especially 10 to 150 um.

10. Process according to one of Claims 2 to 9, characterized in that the carbon particles to be dispersed have a particle size of 0.02 to 500 um, especially 0.03 to 5 um.

11. Process according to one of Claims 3 to 10, characterized in that metallic Si is infiltrated in such a manner that a proportion of free Si of 3 to 30% by weight, especially 8 to 15% by weight, emerges.

12. Process according to one of Claims 1 to 11, characterized in that the amount of synthetic resin and where necessary the infiltration of Si are dimensioned so that up to 20% by weight, especially 0 to 2% by weight residual carbon remain.

## Revendications

1. Procédé de fabrication de pièces en céramique, dans lequel est réalisée une dispersion de matières premières céramiques pulvérulentes, la dispersion est coulée dans un moule sans pression ou sous une faible pression allant jusqu'à environ 5 bars, et l'ébauche verte durcie et démoulée est soumise à un traitement thermique, caractérisé en ce qu'une dispersion relativement fluide de matières premières céramiques est réalisée dans un composé organique durcissable fluide, lequel se durcit sans exprimer de liquide, de l'eau d'allongement éventuellement additionnée pour diminuer la viscosité (au maximum jusqu'à environ 30% en poids) étant d'abord résorbée dans la résine se réticulant et seulement ensuite évaporée ou volatilisée lors du traitement thermique ultérieur, le recuit de l'ébauche verte sous atmosphère de gaz inerte, et lequel est coulé dans un moule non absorbant, l'ébauche verte étant recuite sous atmosphère inerte de telle sorte que le composé organique durci est craqué.

2. Procédé selon la revendication 1, caractérisé en ce que, en tant que matières céramiques pulvérulentes, on disperse du SiC avec des particules fines de carbone dans une résine synthétique fluide.

3. Procédé selon la revendication 2, caractérisé en ce que, après le craquage de la résine synthétique, du Si métallique est infiltré à température élevée sous forme fondue et/ou de vapeur.

4. Procédé selon l'une quelconque des revendications 1 à 3, caractérisé en ce qu'on utilise un moule souple.

5. Procédé selon l'une quelconque des revendications 1 à 4, caractérisé en ce que le durcissement de la résine synthétique est accéléré par chauffage.

6. Procédé selon l'une quelconque des revendications 1 à 5, caractérisé en ce qu'on utilise des mornes en matières synthétiques, en particulier en caoutchouc silicone ou en hydrocarbures polyhalogénés.

7. Procédé selon l'une quelconque des revendications 2 à 6, caractérisé en ce qu'on utilise pour fabriquer la dispersion environ de 5 à 40 % en poids, en particulier de 10 à 25 % en poids, de résine synthétique, éventuellement avec jusqu'à environ 15% en poids, en particulier de 3% à 10 % en poids, d'eau additionnée, et le reste de SiC et de C.

8. Procédé selon l'une quelconque des revendications 2 à 7, caractérisé en ce que la proportion de SiC par rapport au C est d'environ 80/20 jusqu'à 95/5, en particulier environ 90/10.

9. Procédé selon l'une quelconque des revendications 1 à 8, caractérisé en ce que les particules de matières céramiques à disperser présentent un calibre d'environ 0,5 à 500 µm, en particulier de 10 à 150 µm.

10. Procédé selon l'une quelconque des revendications 2 à 9, caractérisé en ce que les particules de carbone à disperser présentent un calibre compris entre 0,02 à 500 µm, en particulier compris entre 0,03 à 5 µm.

11. Procédé selon l'une quelconque des revendications 3 à 10, caractérisé en ce que le Si métallique est infiltré de telle sorte que cela produit une proportion de Si libre allant de 3 à 30 % en poids, en particulier de 8 à 15 % en poids.

12. Procédé selon l'une quelconque des revendications 1 à 11, caractérisé en ce que la quantité de résine synthétique et éventuellement l'infiltration de Si sont mesurées de telle sorte qu'il reste jusqu'à environ 20 % en poids, en particulier de 0 à 2 % en poids, de carbone résiduel.
